Europäisches Patentamt

European Patent Office

Office européen des brevets

(11) Publication number: **0 032 824**
**B1**

# EUROPEAN PATENT SPECIFICATION

(45) Date of publication of patent specification: **03.10.84**

(21) Application number: **81300195.5**

(22) Date of filing: **16.01.81**

(51) Int. Cl.³: **F 16 L 47/06,** F 16 L 17/02, F 16 L 19/08, F 16 L 21/06

(54) Improvements in or relating to pipe joints and pipe couplings.

(30) Priority: **21.01.80 GB 8001946**

(43) Date of publication of application:
**29.07.81 Bulletin 81/30**

(45) Publication of the grant of the patent:
**03.10.84 Bulletin 84/40**

(84) Designated Contracting States:
**BE CH DE FR IT LI NL SE**

(56) References cited:
**DE-A-2 609 576**
**DE-A-2 624 425**
**FR-A-2 283 381**
**GB-A-1 334 339**
**GB-A-2 022 748**
**US-A-3 697 102**
**US-A-3 953 057**

(73) Proprietor: **THE VICTAULIC COMPANY PLC**
**P.O. Box 13 46-48 Wilbury Way**
**Hitchin Hertfordshire SG4 0AP (GB)**

(72) Inventor: **Denning, John Allan**
**36 Leys Avenue Desborough**
**Kettering Northamptonshire (GB)**

(74) Representative: **Heath, Peter William Murray**
**FRY HEATH & CO. Seloduct House 16-18 Station**
**Road**
**Redhill Surrey RH1 1NF (GB)**

Courier Press, Leamington Spa, England.

## Description

This invention relates to pipe joints and pipe couplings. More particularly the invention relates to such joints and couplings for connecting pipes or pipe like members of plastics to other pipes or pipe like members or to pipe work fittings such as elbows, "T" junctions, valves, etc.

A fitting for connection to tubes is known from GB—A—2022748 having a sleeve with an internal recessed end portion. An insert is secured within the recessed end portion of the sleeve and provides a groove within which is located an annular sealing member. An annular member with internal inclined teeth is provided for locking purposes.

Similarly, DE—A—2624425 discloses a pipe coupling member having a sleeve with an internal recess at one end. A spring washer is located within the recess having inwardly inclined teeth, and an insert secured within the internal recess of the sleeve, which together with a washer provides a groove within the fitting for a sealing ring.

It is to be noted that in both of these arrangements the insert is secured within the sleeve by means of screw threading. Securing by this means can lead to problems of leakage through the threads, problems of the coupling coming apart under certain operational conditions, and involves considerable cost in manufacture and assembly in forming and connecting the threaded portions.

It is an object of the present invention to overcome these problems.

According to the invention there is provided a coupling member for pipes or pipe like members comprising an annular sleeve of plastics material having an open end; an annular internal recess in the sleeve extending from the open end thereof; a spring washer disposed in the annular recess at the end thereof remote from the open end of the sleeve, and having radially inwardly extending teeth which, in an unstressed condition, project beyond the internal wall of the sleeve and are inclined in a direction axially inwardly of the sleeve; an annular insert of plastics material within the annular recess at or adjacent the open end of the sleeve; characterised in that the annular insert is provided with an internal annular groove within which is located a resilient elastomeric annular member adapted to constitute a sealing member for the coupling; and wherein the annular insert is secured within the annular recess by welding or fusing of the annular insert within the annular recess.

The coupling member may be of polymeric material and may be of polyethylene material.

The resilient elastomeric annular member may be in the form of "O" ring and may be of circular or oval cross section.

With a coupling member according to the invention as hereinabove defined, the joint is made by inserting a pipe (of a sliding fit) into the open end of the sleeve member. The sealing member is deformed and compressed by the pipe as it is inserted so as to provide its required sealing effect. The teeth of the spring washer are then deflected axially inwardly of the sleeve member (i.e. the direction of their original inclination) by the passage of the pipe. Any subsequent attempt to remove the pipe will tend to straighten the deflected teeth of the spring washer which will therefore bite into the pipe and resist outward movement of the pipe. The pipe is secured by welding.

The invention includes within its scope joints incorporating a coupling member as defined above.

The sleeve may be part of a pipe fitting of the kind mentioned earlier or may be a double ended sleeve having internal recesses, spring washers, inserts, and sealing members at each end so as to provide a coupling member as such between two pipes or pipe like members.

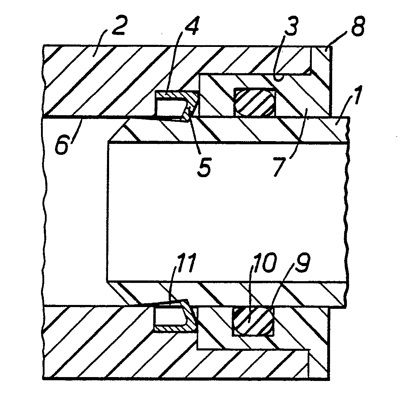

In order that the invention may be more readily understood one embodiment thereof will now be described by way of example with reference to the accompanying drawing which is a sectional elevation of a joint illustrating a coupling in accordance with the invention.

The joint shown in the figure is intended for use with, for example a hot water pipe work system and includes a pipe 1 of cross-linked polyethylene, and a coupling including a sleeve member 2 of the same material. The coupling and sleeve members typically may comprise one arm of a "T" connector coupling.

The sleeve member 2 is provided with an annular internal recess 3 extending from the open end of the sleeve member. It is to be noted that the annular recess 3 is of a stepped configuration having two separate internal diameters. The axially innermost portion of the recess 3 (from the open end of the sleeve) has a lesser internal diameter and carries a stainless steel spring washer 4. The washer 4 has radially inwardly extending teeth 5 which project inwardly of the internal wall 6 of the sleeve member 2.

The axially outer portion of the annular recess 3 (from the open end of the sleeve) carries an annular insert 7 formed of cross-linked polyethylene. It is to be observed that the internal diameter of the annular insert 7 corresponds to that of the sleeve 2 so that the internal wall of the annular insert is flush with the internal wall 6 of the sleeve member 2. The annular insert is also provided with a radially outwardly directed flange portion 8 thereby providing an axial end wall to the sleeve 2.

An internal annular groove 9 is provided within the annular insert 7 within which is mounted a sealing member 10 in the form of a "O" ring of a rubber resistant to the effects of hot water such as an ethylene propylene copolymer rubber.

The coupling illustrated is assembled firstly by inserting the washer 4 within the annular recess 3, fitting the annular insert member into place within the recess 3 (prior to cross-linking), Fusing the insert in place within the sleeve 2 by a known fusion technique, and then polymer cross-linking the assembly in known manner. Finally the "O" ring 10 is push located into its groove 9 within the annular insert 7.

As can be seen from the figure, the pipe 1 is a sliding fit within sleeve 2 and annular insert 7. When fitted within the sleeve 2, the pipe compresses the sealing member 10 from its normal circular cross-section thereby effecting a normal compression seal.

Movement of the pipe 1 inwardly axially of the coupling past the teeth 5 of the washer 4 has resulted in the pipe being scored as indicated at 11. Any attempt to remove the pipe 1 from the sleeve 2 in the position indicated in the figure will tend to straighten the teeth 5 which will thereby bite further into the pipe 1 resisting removal thereof.

Although pipe 1 is shown formed wholly of polyethylene, it will be appreciated that the embodiment of the invention illustrated is equally applicable with, for example, polyethylene pipe having an internal metal liner.

The arrangement hereinabove illustrated in accordance with the present invention has the advantage that there is no interference between the sealing ring 10 and the washer member 4 which could under certain working conditions affect the satisfactory functioning of the joint. In addition we have found that the provision of an accurate annular groove or cavity for the sealing member 10 ensures a consistent sealing surface between the pipe 1 and the ring 10.

Yet again an advantage of the embodiment of the invention hereinabove described and illustrated is the considerable surface area of fusion between the insert member 7 and the sleeve 2, leading to a considerable strength in the arrangement without increasing outside dimensions of the coupling.

## Claims

1. A coupling member for pipes or pipe like members comprising an annular sleeve member (2) of plastics material having an open end; an annular internal recess (3) in the sleeve extending from the open end thereof; a spring washer (4) disposed in the annular recess at the end thereof remote from the open end of the sleeve, and having radially inwardly extending teeth (5) which, in an unstressed condition, project beyond the internal wall (6) of the sleeve and are inclined in a direction axially inwardly of the sleeve; an annular insert (7) of plastics material within the annular recess at or adjacent the open end of the sleeve; characterised in that the annular insert (7) is provided with an internal annular groove within which is located a resilient elastomeric annular member (10) adapted to constitute a sealing member for the coupling; and wherein the annular insert is secured within the annular recess by welding or fusing of the annular insert within the annular recess.

2. A coupling member as claimed in Claim 1 wherein the resilient elastomeric annular member (10) is in the form of an "O" ring of circular or oval cross-section.

3. A coupling member as claimed in Claim 1 or 2 wherein said annular internal recess is shouldered part way along its length, the end thereof remote from the open end of the sleeve having a smaller internal diameter than the remainder of the recess.

4. A coupling member as claimed in Claim 3 wherein the annular insert is located within the portion of the annular recess having the larger internal diameter.

5. A coupling member as claimed in Claim 4 wherein the inner end of the annular insert consitutes a side wall of an annular groove locating the spring washer.

6. A coupling member as claimed in any one of the preceding claims wherein the sleeve member is part of a pipe work fitting.

7. A coupling member as claimed in any one of claims 1 to 6 wherein the sleeve member is a double ended sleeve having a said internal recess, spring washer, insert, and sealing member at each end so as to provide a coupling member as such between two pipes or pipe like members.

8. A pipe joint characterised by incorporating a coupling member as claimed in any one of the preceding claims.

## Revendications

1. Un élément de raccordement pour des tuyaux ou pour des éléments du genre tubulaire comprenant un élément à manchon annulaire (2) en matière plastique dont une extrémité est ouverte; un évidement annulaire intérieur (3) dans le manchon s'étendant de l'extrémité ouverte de celui-ci; une rondelle à ressort (4) aménagée dans l'évidement annulaire au bout éloigné de l'extrémité ouverte du manchon et étant pourvue d'une denture (5) s'étendant radialement vers l'intérieur qui, dans l'état non-contraint, saillit au dela du paroi intérieur (6) du manchon et s'incline vers l'intérieur dans le sens axial du manchon; une pièce rapportée annulaire (7) en matière plastique se trouvant dans l'évidement annulaire au niveau ou à proximité de l'extrémité ouverte du manchon; caractérisé en ce que la pièce rapportée annulaire (7) est pourvue d'une rainure intérieure annulaire dans laquelle se situe un élément annulaire en elastomer resilient (10) adapté pour constituer un élément de fermeture étanche pour le raccordement; et dans lequel la pièce rapportée annulaire est retenue dans l'évidement annulaire au moyen de la soudure ou la fusion de la pièce rapportée annulaire dans l'évidement annulaire.

2. Un élément de raccordement selon la Revendication 1 dans lequel l'élément annulaire en elastomer resilient (10) a la forme d'une bague en "O" d'une section circulaire ou ovale.

3. Un élément de raccordement selon les Revendications 1 et 2 dans lequel le dit évidement intérieur annulaire est épaulé en partie sur sa longueur, dont le bout éloigné de l'extrémité ouverte du manchon est d'un diamètre intérieur inférieur au reste de l'évidement.

4. Un élément de raccordement selon la Revendication 3 dans lequel la pièce rapportée annulaire est située dans la partie de l'évidement annulaire ayant un diametre intérieur plus large.

5. Un élément de raccordement selon la Revendication 4 dans lequel l'extrémité intérieure de la pièce rapportée annulaire constitue un paroi d'une rainure annulaire de retenue de la rondelle à ressort.

6. Un élément de raccordement selon n'importe laquelle des revendications précédentes, dans lequel l'élément à manchon forme partie d'une tuyauterie.

7. Un élément de raccordement selon n'importe laquelle des Revendications 1 à 6, dans lequel l'élément à manchon est un manchon à double extrémité ayant les sus-dits évidement intérieur, rondelle à ressort, pièce rapportée et élément de fermeture étanche à chaque extrémité afin de former un élément de raccordement tel quel entre deux tuyaux ou des éléments du genre tubulaire.

8. Un assemblage de tuyaux caractérisé en ce qu'il incorpore un élément de raccordement selon n'importe laquelle des revendications précédentes.

**Patentansprüche**

1. Kupplungsglied für Rohre oder rohrartige Körper mit einem ringförmigen Hülsenkörper (2) aus Plastikmaterial, der ein offenes Ende aufweist; mit einer ringförmigen Innenausnehmung (3) in der Hülse, die sich von dem offenen Ende derselben erstreckt; mit einer Federscheibe (4), die in der ringförmigen Ausnehmung an jenem Ende angeordnet ist, das dem offenen ende der Hülse entfernt liegt und die radial nach innen verlaufende Zähne (5) aufweist, die in unbeanspruchter Lage über die Innenwand (6) der Hülse vorstehen und in Richtung axial nach dem Inneren der Hülse geneigt sind; und mit einem Ringeinsatz (7) aus Plastikmaterial innerhalb der Ringausnehmung am offenen Ende der Hülse oder benachbart hierzu, dadurch gekennzeichnet, daß der Ringeinsatz (7) mit einer inneren Ringnut ausgestattet ist, in der ein federnder, aus elastomerem Material bestehender Ring (10) angeordnet ist, der eine Abdichtung für die Kupplung bildet, und daß der Ringeinsatz innerhalb der Ringausnehmung durch Verschweißen oder Aufschmelzen des Ringeinsatzes in die Ringausnehmung festgelegt ist.

2. Kupplungsglied nach Anspruch 1, bei welchem der federnde elastomere Ring (10) die Gestalt eines "O"-Ringes mit kreisförmigem oder ovalem Querschnitt besitzt.

3. Kupplungsglied nach den Ansprüchen 1 oder 2, bei welchem die ringförmige Innenausnehmung auf einem Teil ihrer Länge abgestuft ist, wobei das ende der Abstufung, welches vom offenen Ende der Hülse entfernt liegt, einen kleineren Innendurchmesser aufweist als die übrige Ausnehmung.

4. Kupplungsglied nach Anspruch 3, bei welchem der Ringeinsatz in jenem Teil der Ringausnehmung angeordnet ist, die den größeren Innendurchmesser besitzt.

5. Kupplungsglied nach Anspruch 4, bei welchem das innere Ende des Ringeinsatzes eine Seitenwand einer Ringnut bildet, in der die Federscheibe liegt.

6. Kupplungsglied nach einem der vorhergehenden Ansprüche, bei welchem der Hülsenkörper einen Teil einer Rohrarmatur bildet.

7. Kupplungsglied nach einem der Ansprüche 1 bis 6, bei welchem der hülsenkörper aus einer Hülse mit zwei offenen Enden besteht, in der die Innenausnehmung, die Federscheibe, der Ringeinsatz und der Dichtungsring an beiden Enden derart angeordnet sind, daß ein Kupplungskörper gebildet wird, der die Verbindung zwischen zwei Rohren oder rohrartigen Körpern herstellen kann.

8. Rohrverbindung, gekennzeichnet durch den Einsatz eines Kupplungsgleides nach einem der vorhergehenden Ansprüche.

0 032 824